# EUROPÄISCHE PATENTSCHRIFT

(11) **EP 4 524 539 B1**
(45) Veröffentlichungstag und Bekanntmachung des Hinweises auf die Patenterteilung: **25.03.2026**
(21) Anmeldenummer: 23196923.9
(22) Anmeldetag: 12.09.2023
(51) Int. Cl.: G01M 3/26, G01M 3/32

(54) **VERFAHREN UND VORRICHTUNG ZUR DRUCKLUFTÜBERWACHUNG**
METHOD AND DEVICE FOR COMPRESSED AIR MONITORING
PROCÉDÉ ET DISPOSITIF DE SURVEILLANCE D'AIR COMPRIMÉ

(43) Veröffentlichungstag der Anmeldung: 19.03.2025
(73) Patentinhaber: SICK AG, 79183 Waldkirch (DE)
(72) Erfinder: Kaschube, Kolja, 20146 Hamburg (DE)

(56) Entgegenhaltungen:
- US-A1- 2009 164 148
- US-A1- 2018 113 442
- US-A1- 2018 304 434

## Beschreibung

Die vorliegende Erfindung betrifft ein Prozessüberwachungverfahren und ein Prozessüberwachungssystem für die Überwachung des Druckluftverbrauchs eines industriellen Prozesses.

Aufgrund steigender Energiekosten, beispielsweise für Druckluft, Strom, Industriegase und/oder Wasser werden mehr und mehr industrielle Prozesse mittels Sensoren überwacht. Mittels der Sensoren kann dann beispielsweise der Verbrauch von Druckluft überwacht werden, wobei insbesondere auch Lecks in den Druckluftleitungen ermittelbar sind. Das ist notwendig, denn ein Großteil der verbrauchten Luft in Druckluftsystemen geht durch Leckagen verloren. Solche Verluste können bis zu 50 % betragen, ohne dass dies erkannt wird.

Besonders schwierig sind Leckagen dann zu erkennen, wenn die Maschine in Betrieb ist, da sie dann sowieso Druckluft verbraucht und eine Leckage schwierig von einem regulären Verbrauch zu unterscheiden ist. Wenn Druckluftdurchflussdaten durch oben genannte Sensoren vorhanden sind, können Muster im Druckluftverbrauch für eine einzelne Maschine analysiert werden. Solche Analysen werden derzeit manuell von Experten durchgeführt, um mögliche Leckagequellen zu finden. Das ist ein sehr zeitaufwendiger und damit kostenträchtiger Prozess.

Aus "Identifikation und Klassifikation von Druckluft-Leckagen mit Methoden des maschinellen Lernens in Maschinen" von Christian Dierolf, URN: urn:nbn:de:bsz:93-opus-ds-121415; DOI: 10.18419/opus-12124; https://d-nb.info/125714281X und der Online-Veröffentlichung "Machine Learning zur Leckage-Erkennung" der Emerson Automation Solutions Aventics GmbH in dem online Magazin wirautomatisierer.de abrufbar unter https://wirautomatisierer.industrie.de/machine-learning/emersonnutzt-machine-learning-zur-leckage-erkennung/# sind Verfahren zum Kalibrieren von Druckluftnetzwerken bekannt, die zum Einlernen und Kalibrieren ideale Bedingungen benötigen, also Systeme, die keinerlei Leckagen aufweisen. Solche Bedingungen herrschen aber im wirklichen Leben nie, so dass diese Verfahren theoretisch zwar sehr gut funktionieren, aber nicht praxisrelevant sind. Tatsächlich ist es in der realen Anwendung weiterhin notwendig, Druckluftdurchflussdaten an der Maschine in der Anwendung zu sammeln und Verbrauchsmuster für eine einzelne Maschine/Verbraucher aufzustellen und manuell durch Experten analysieren zu lassen, denn es gibt für eine reale Maschine keine Kenntnis über einen "Gut-Zustand", also komplett ohne Leckagen, und "Schlecht-Zustand", also mit Leckagen, mit denen man ein Machine-Leaming-Modell trainieren könnte.

Das Dokument US2009/0164148 A1 offenbart ein Wasserdichtigkeitsprüfgerät zur Prüfung der Wasserdichtigkeit einer wasserdichten Komponente. Das Prüfgerät umfasst eine Eingabeeinheit, eine Speichereinheit und eine Bestimmungseinheit. Die Eingabeeinheit gibt die Durchlässigkeit eines oder mehrerer Prüfobjekte mit darauf angeordneten wasserdichten Komponenten und eine Luftströmungsrate ein, die das Volumen des Gases ist, das pro Zeiteinheit durch das Prüfobjekt strömt, für jedes Prüfobjekt. Die Speichereinheit speichert in einem Datenpaar die Durchlässigkeit und die Luftströmungsrate jedes von der Eingabeeinheit eingegebenen Prüfobjekts. Die Bestimmungseinheit bestimmt einen Durchlässigkeitsbereich, in dem kein Wasserleck in der wasserdichten Komponente auftritt, basierend auf einem Luftdurchsatzbereich, in dem kein Wasserleck auftritt, und der gespeicherten Durchlässigkeit und Luftdurchsatzrate.

Es ist daher Aufgabe der Erfindung, ein Verfahren und eine Vorrichtung zum automatischen Überwachen eines Druckluftverbrauchs wenigstens einer Maschine bereitzustellen, das für eine reale Maschine im Feld geeignet ist.

Diese Aufgabe wird gelöst durch ein computerimplementiertes Verfahren gemäß Anspruch 1 und eine Vorrichtung gemäß Anspruch 11
Das erfindungsgemäße computerimplementierte Verfahren zum automatischen Überwachen eines Druckluftverbrauchs und Bestimmen der Betriebsart wenigstens einer Maschine umfasst die Schritte:
- Erfassen wenigstens eines Luftdurchflusses an wenigstens einer Druckluftleitung der Maschine mit einem Sensor,
- Erzeugen eines den erfassten Luftdurchfluss repräsentierenden Signals durch den Sensor,
- Fortlaufendes Einlesen und Speichern der Signale in einer Computereinheit,
- nach Ablauf eines bestimmten Zeitintervalls entsprechend dem Erfassen einer bestimmten Anzahl solcher Signale, Verarbeiten der gespeicherten Signale zu einzelnen Verbrauchswerten, die jeweils momentanen Verbräuchen während des vergangenen Zeitintervalls entsprechen,
- Bestimmen eines Minimalwertes und eines Maximalwertes aus den Verbrauchswerten des vergangenen Zeitintervalls,
- Bestimmen, ob die Differenz von Maximalwert und Minimalwert oberhalb oder unterhalb eines definierten Schwellwerts liegt, wobei der Schwellwert in einem Einlernprozess vorab eingelernt wurde,
- Bestimmen einer ersten und einer zweiten Betriebsart der Maschine über die Differenz, wobei die erste Betriebsart dann bestimmt ist, wenn die Differenz unterhalb des Schwellwerts liegt und die zweite Betriebsart dann bestimmt ist, wenn die Differenz oberhalb des Schwellwerts liegt.

Der besondere Vorteil der Erfindung liegt in der einfachen Bestimmung bzw. Unterscheidung zweier Betriebsarten, insbesondere des Ruhezustands der Maschine (idle state) gegenüber einem Normalbetrieb (operating state) der Maschine. Die Erfindung stellt für diese Unterscheidung eine generische Lösung bereit, die es möglich macht, zu jeder Maschine, die Druckluft verbraucht, die Betriebsart zu bestimmen und zu überwachen, ob sich über die Zeit Veränderungen einstellen, die eine Wartung nötig machen. Das war in dieser Einfachheit bisher nicht möglich, auch weil in der Industrie viele verschiedene Schnittstellen vorherrschen und viele Maschinen auch unterschiedlich alt sind, so dass deren Zustände (Normalbetrieb, Ruhezustand, etc.) nicht mit jedem externen Service ermittelt werden können. Mit der Erfindung ist eine Überwachung jeglicher Maschine unabhängig von Schnittstellen, Alter und dergleichen, möglich.

Wenn in diesem Zusammenhang von Maschinen die Rede ist, dann sind immer Maschinen gemeint, die Druckluft verbrauchen, wobei der Druckluftverbrauch mit Sensoren erfassbar ist. Die Sensoren erfassen dabei in irgendeiner Art und Weise den Luftdurchfluss und geben ein den Durchfluss repräsentierendes Signal aus. Die Sensoren können dabei eine Massenflussrate, eine Volumenflussrate, eine Strömungsgeschwindigkeit der Luft, oder dergleichen, erfassen.

Das erfindungsgemäße Verfahren beinhaltet also einen Algorithmus, mit dem ein Luftdurchsatz ausgewertet werden kann, in dem eine einfache Analyse erfolgt und daraus auf die Betriebsart der Maschine geschlossen werden kann, wobei auch der Luftverbrauch selbst in der jeweiligen Betriebsart ausgegeben werden kann.

Die Vorteile für den Benutzer einer Maschine, bei der die Erfindung angewendet wird, bestehen darin,
- dass eine automatische Erkennung von möglichen Leckagen des Druckluftsystems möglich ist,
- dass der Druckluftverbrauch optimierbar ist,
- dass der Druckluftverbrauch transparent darstellbar ist, ohne eine manuelle Analyse der Daten, was eine Zeitersparnis bedeutet,
- dass mit der Erfindung eine große Anzahl von verschiedenen Maschinen oder ganzen Werken mit mehreren Maschinen zum Monitoring erfasst werden können.

Als besonderen Vorteil ist der Algorithmus bzw. die Auswertung sehr einfach und benötigt wenig Rechenressourcen (wenig Speicher, wenig Programmcode, wenig Laufzeit) und kann in fast jedes Gerät implementiert werden. So kann die Auswertung, also die Computereinheit, zum Beispiel in einem der Druckluftsensoren integriert sein oder über einen Cloud-Service zur Verfügung stehen.

Gegenüber den bekannten Verfahren des maschinellen Lernens ist das erfindungsgemäße Verfahren deterministisch und vorhersagbar und hat deshalb wenig Wartungsbedarf. So ist es für alle möglichen Anwendungen einsetzbar ohne spezielle Anpassungen. Entsprechend können mit der Erfindung Kosten eingespart werden.

Vorteilhafterweise ist, wie oben bereits erwähnt, die erste Betriebsart ein Ruhezustand (idle state) der Maschine und die zweite Betriebsart ein Normalbetrieb (operating state). Diese Unterscheidung ist bei einer Beobachtung der Maschine die wichtigste.

Um mehr als zwei Betriebsarten bestimmen zu können, sind in Weiterbildung der Erfindung mehrere Schwellwerte vorgesehen. Weiterhin kann die Verwendung der statistischen Varianz eine Verbesserung der Genauigkeit bei der Bestimmung der Betriebsarten hervorbringen.

In Weiterbildung der Erfindung werden Luftdurchflüsse mehrerer Druckluftleitungen mit entsprechender Anzahl von Sensoren erfasst. Damit besteht die Möglichkeit, mehrere Maschinen gleichzeitig und separat zu überwachen, bis hin zu einer ganzen Fabrikhalle. Für jede Maschine kann eine gesonderte Auswertung erfolgen, wenn diese Maschine wenigstens einen ihr zugeordneten Sensor hat. Auf gleiche Art und Weise können auch mehrere Teile einer Maschine separat überwacht werden, wenn für jedes Teil wenigstens ein Sensor vorhanden ist.

In diesem Zusammenhang können auch die Signale von mehreren Sensoren zu einem Verbrauchswert zusammengefasst werden, um Verbräuche einer Maschinengruppe zu erhalten und diese Gruppe für sich zu überwachen.

Wie bereits oben angedeutet, können mehrere Maschinen gleichzeitig überwacht werden, insbesondere wenn jeder Maschine maschineneigene Schwellwerte zugeordnet sind.

Vorteilhafterweise werden die Verbrauchswerte und/oder Betriebsart auf einem Display angezeigt, um aktuelle Werte jederzeit ablesen zu können.

Es hat sich als vorteilhaft herausgestellt, wenn das Zeitintervall ca. eine Stunde oder mehr umfasst und das Verarbeiten der Anzahl Signale zu einem Verbrauchswert ein Aufaddieren der Signalwerte umfasst, wobei vorteilhafter Weise der aktuelle Sensorwert in kurzen Zeitabständen, beispielsweise Sekunden oder Minuten fortlaufend erfasst und gespeichert wird, so dass der resultierende Verbrauchswert eine möglichst gute Wiedergabe des tatsächlichen Verbrauchs ist.

Der bzw. die vorgenannten Schwellwerte werden in Weiterbildung der Erfindung durch ein computerimplementiertes Einlernverfahren eingelernt, wobei das Einlernen der Schwellwerte folgende Schritte umfasst:
- Betreiben der Maschine in den verschiedenen Betriebsarten jeweils über einen längeren Zeitraum, der aus einer Vielzahl der Zeitintervalle besteht, die zusammen z.B. eine Woche ergeben,
- Erfassen von Verbrauchswerten in dem Zeitintervall,
- Bestimmen eines Minimalwertes und eines Maximalwertes der Verbrauchswerte aus dem Zeitintervall,
- Bestimmen einer Differenz von Maximalwert und Minimalwert,
- Erzeugen eines Histogramms aus den Differenzen über den längeren Zeitraum,
- Auswerten des Histogramms und Finden von Spitzenwerten,
- Zuordnen der Spitzenwerte zu den Betriebsarten,
- Setzen von wenigstens einem Schwellwert zwischen die Spitzenwerte, so dass der Bereich unterhalb des Schwellwerts einer ersten Betriebsart der Maschine zugeordnet ist und der Bereich oberhalb des Schwellwerts einer zweiten Betriebsart.

Gegenstand der Erfindung ist ebenso eine dem oben beschriebenen Verfahren entsprechende Vorrichtung zum automatischen Überwachen eines Druckluftverbrauchs wenigstens einer Maschine. Diese Vorrichtung weist auf:
- wenigstens einen Sensor zum Erfassen wenigstens eines Luftdurchflusses an wenigstens einer Druckluftleitung der Maschine und Erzeugen eines den erfassten Luftdurchfluss repräsentierenden Signals durch den Sensor,
- eine Computereinheit, die ausgebildet ist, das Signal des Sensors fortlaufend einzulesen und in einem Speicher zu speichern sowie nach Ablauf eines bestimmten Zeitintervalls, entsprechend dem Erfassen einer bestimmten Anzahl der Signale, die gespeicherten Signale zu einzelnen Verbrauchswerten zu verarbeiten, die jeweils momentanen Verbräuchen während des vergangenen Zeitintervalls entsprechen,
- und die Computereinheit weiter ausgebildet ist, einen Minimalwert und einen Maximalwert aus den Verbrauchswerten des vergangenen Zeitintervalls zu bestimmen,
- und die Computereinheit weiter ausgebildet ist zu bestimmen, ob die Differenz oberhalb oder unterhalb eines definierten Schwellwerts liegt, wobei der Schwellwert in einem Einlernprozess vorab eingelernt wurde,
- und die Computereinheit weiter ausgebildet ist, eine erste und eine zweite Betriebsart der Maschine über die Differenz zu bestimmen, wobei die erste Betriebsart dann bestimmt ist, wenn die Differenz unterhalb des Schwellwerts liegt und die zweite Betriebsart dann bestimmt ist, wenn die Differenz oberhalb des Schwellwerts liegt.

Die Computereinheit kann Teil des Sensors sein, oder auch als Cloud-Service realisiert sein.

In Weiterbildung der erfindungsgemäßen Vorrichtung weist die Computereinheit einen Ausgang auf, auf dem die Betriebsart ausgegeben werden kann. An einem solchen Ausgang könnte auch bei Erkennung einer Fehlfunktion, wie Leckage oder dergleichen, ein Fehlersignal ausgegeben werden.

Zur Ausgabe einer Anzeige der Betriebsart oder Darstellung der Verbräuche kann ein Display vorgesehen sein.

In Weiterbildung der Vorrichtung ist die Computereinheit ausgebildet, Signale mehrerer Sensoren zu verarbeiten, um mehrere Maschinenteile oder mehrere Maschinen zu überwachen.

Nachfolgend wird die Erfindung anhand von Ausführungsbeispielen unter Bezugnahme auf die Zeichnung im Einzelnen erläutert. In der Zeichnung zeigen:
- Fig. 1: eine Ausführungsform einer erfindungsgemäßen Vorrichtung;

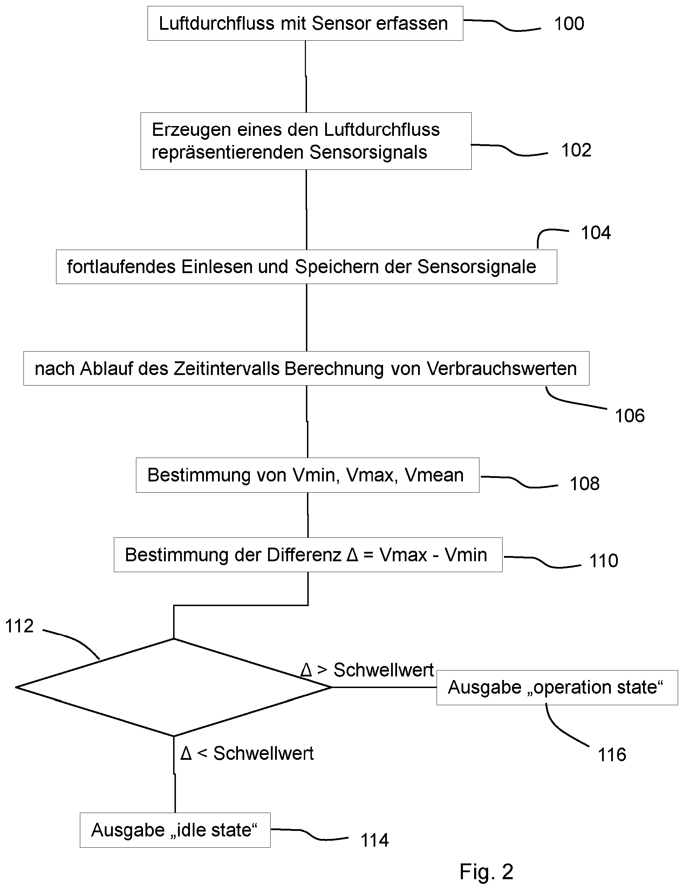

- Fig. 2: eine Flussdiagramm Darstellung des erfindungsgemäßen Verfahrens;
- Fig. 3: ein Diagramm der Verbrauchswerte über der Zeit;
- Fig. 4: ein Histogramm der Verbrauchswerte aus Fig. 3.

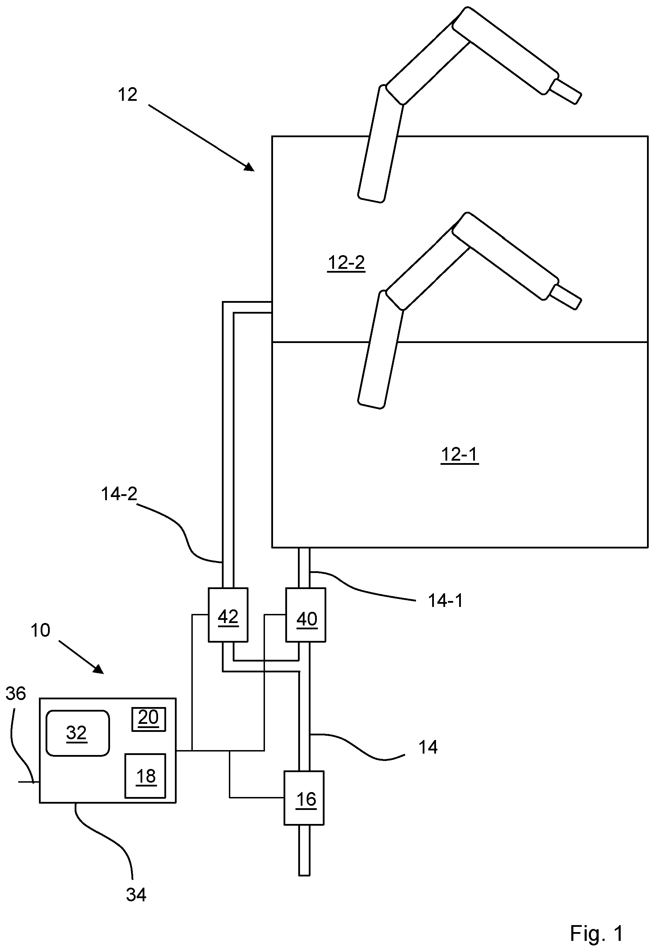

Fig. 1 zeigt in einer sehr schematischen Darstellung eine Ausführungsform einer erfindungsgemäßen Vorrichtung 10 zum Bestimmen der Betriebsart einer Maschine 12 und zum automatischen Überwachen eines Druckluftverbrauchs der Maschine 12. In diesem Ausführungsbeispiel besteht die Maschine 12 aus zwei Maschinenteilen 12-1 und 12-2, die beide für den Betrieb Druckluft benötigen. Die Druckluft wird über eine Haupt-Druckluftleitung 14 der Maschine 12 zugeführt. Zur Versorgung der beiden Maschinenteile 12-1 und 12-2 teilt sich die Haupt-Druckluftleitung 14 auf in eine erste Druckluftleitung 14-1 für den Maschinenteil 12-1 und eine zweite Druckluftleitung 14-2 für den Maschinenteil 12-2.

Die Vorrichtung 10 umfasst wenigstens einen Sensor 16 zum Erfassen des Luftdurchflusses durch die Haupt-Druckluftleitung 14. Der Sensor 16 erzeugt ein den erfassten Luftdurchfluss repräsentierendes, bevorzugt elektrisches, Signal. Dieser Sensor 16 kann in der einfachsten Form ein Sensor sein, der lediglich die Geschwindigkeit der durch die Druckluftleitung strömenden Luft misst, denn aus der Strömungsgeschwindigkeit lässt sich bei Kenntnis von Druck und Temperatur über den Querschnitt der Druckluftleitung 14 auf den Luftdurchfluss schließen. Aber auch jeder andere Sensor, der in irgendeiner Weise dazu dienen kann, den Durchfluss der Luft und damit den Verbrauch an Druckluft zu bestimmen, kann eingesetzt werden. Mit Luftdurchfluss ist im Sinne dieser Erfindung ein Wert gemeint, der in irgendeiner Weise dazu dienen kann, den Verbrauch an Druckluft in einem Zeitintervall Ti zu bestimmen oder anzugeben. Das kann zum Beispiel ein Wert sein, der Masse pro Zeiteinheit angibt oder Volumen pro Zeit. Im Folgenden wird der Einfachheit halber lediglich "Durchfluss" bzw. in den Diagrammen die volumetrische Flussrate Vol/h, also Volumen pro Zeit, verwendet.

Der Sensor 16 ist mit einer Computereinheit 18 verbunden zur Weiterleitung des Signals an die Computereinheit 18. Diese Computereinheit 18 ist ausgebildet, das Signal des Sensors 16 fortlaufend einzulesen, beispielsweise mit einer Frequenz, die vom Durchfluss oder auch vom Sensor 16 selbst abhängt. Beispielsweise kann ein solcher Durchflusswert einmal pro Sekunde ausgelesen werden. Diese ausgelesenen Durchflusswerte werden in einem Speicher 20 gespeichert. Nach Ablauf eines bestimmten Zeitintervalls Ti, das beispielsweise 1 Stunde sein kann, werden die gespeicherten Werte der letzten Stunde zu sinnvoll verwertbaren Einzelwerten ausgewertet. Da aus den Einzelwerten des gemessenen Durchflusses ein momentaner Verbrauch pro Zeit ermittelt werden kann, werden aus den gespeicherten Einzelwerten ein Mittelwert Vmean, ein Minimalwert Vmin und ein Maximalwert Vmax des Verbrauchs pro Zeiteinheit berechnet. Der Mittelwert Vmean gibt dann den mittleren Verbrauch in der vergangenen Stunde an und der Minimalwert Vmin bzw. der Maximalwert Vmax geben einen minimalen bzw. maximalen Verbrauch pro Zeit an, der in der vergangenen Stunde aufgetreten ist.

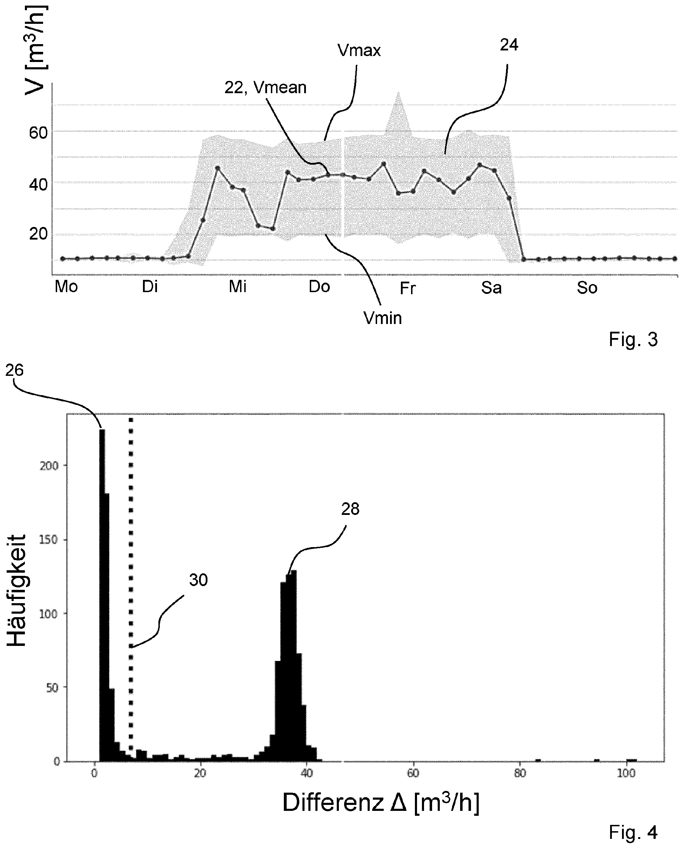

Diese Werte, die jeweils für ein Zeitintervall Ti bestimmt wurden, über die Zeit aufgetragen ergeben ein Diagramm wie es in Fig. 3 dargestellt ist. Es ist dort ein Zeitraum über eine Woche aufgetragen, wobei jeweils etwa sechs Punkte 22 pro Tag eingezeichnet sind. Diese Punkte 22 geben also jeweils den mittleren Verbrauch Vmean pro ca. 4 Stunden (Zeitintervall Ti) an. Die die Punkte 22 verbindende Linie dient lediglich zur Führung des Auges. Der grauschattierte Bereich 24 gibt die Schwankungsbreite an, ist also der Bereich, der zwischen den jeweiligen Minimalwerten Vmin und Maximalwerten Vmax liegt.

Aus diesen Minimalwerten Vmin und Maximalwerten Vmax bestimmt die Computereinheit 18 je Zeitintervall Ti Differenzen Δi = (Vmax-Vmin). Eine solche Differenz Δ gibt also jeweils die Schwankungsbreite in dem jeweiligen Zeitintervall Ti an.

In einem Einlernverfahren, das sich über eine Vielzahl der Zeitintervalle erstreckt, beispielsweise über eine Woche, wurden die Differenzen Δ in einem Histogramm aufgesammelt, wie es Fig. 4 zeigt. In diesem Histogramm sind Spitzenwerte 26 und 28 zu erkennen, die in dem Einlernverfahren bestimmt wurden. Der Spitzenwert 26 liegt in der Nähe von null und bildet daher den Ruhezustand (idle state) der Maschine 12 ab, da im Ruhezustand nichts passiert und daher keine Schwankungen im Druckluftdurchfluss auftreten. Der Spitzenwert 28 beschreibt den Bereich großer Schwankungsbreite im Druckluftdurchfluss und damit den Normalbetrieb (operation state). Im Einlernverfahren wurde deshalb zwischen die Spitzenwerte 26 und 28 ein Schwellwert 30 gesetzt bzw. wird im Einlernverfahren automatisch von der Computereinheit 18 bestimmt. Dieser Schwellwert 30 ist in Fig. 4 durch die vertikale gepunktete Linie dargestellt. Wenn die Schwankungsbreite, also Differenz Δ, unterhalb dieses Schwellwerts 30 liegt, befindet sich die Maschine 12 im Ruhezustand. Wenn die Differenz Δ oberhalb dieses Schwellwerts 30 liegt, befindet sich die Maschine 12 im Normalbetrieb.

Ist dieses Einlernverfahren einmal für die Maschine 12 durchgelaufen, kann also mit der erfindungsgemäßen Vorrichtung 10 die Betriebsart der Maschine 12 bestimmt werden, in dem die Schwankungsbreite Δ für das vergangene Zeitintervall mit dem Schwellwert 30 verglichen wird. Liegt die Differenz Δ unterhalb des Schwellwerts, dann befindet sich die Maschine 12 im Ruhezustand, liegt die Differenz oberhalb des Schwellwerts 30, dann befindet sich die Maschine im Normalbetrieb.

Des Weiteren kann durch Beobachtung der Schwankungsbreite Δ und Vergleich mit den Schwankungsbreiten aus dem Einlernverfahren eine Anomalie beim Betrieb der Maschine festgestellt werden. Dabei bedeutet Anomalie eine ungewöhnliche Änderung des Druckluftdurchflusses. Auf diese Art können Leckagen ermittelt werden.

Die Betriebsart und auch die Darstellung der Verbrauchswerte, wie zum Beispiel in Fig. 3, können in dem Ausführungsbeispiel nach Fig. 1 auf einer Anzeige 32 dargestellt werden. Die Computereinheit 18, der Speicher 20 und die Anzeige 32 können als externe Auswerteeinheit 34 wie in Fig. 1 dargestellt, ausgebildet sein oder auch Remote in einem Cloud-Service zur Verfügung stehen. Alternativ können diese Elemente auch in dem Sensor 16 integriert sein.

Alternativ oder zusätzlich weist die Computereinheit 18 bzw. Auswerteeinheit 34 einen Ausgang 36 auf, auf dem die Betriebsart ausgegeben werden kann. An einem solchen Ausgang 36 könnte auch bei Erkennung einer Anomalie, Fehlfunktion oder Leckage, wie oben erläutert, ein Fehlersignal ausgegeben werden.

Mit der erfindungsgemäßen Vorrichtung 10 lässt sich nicht nur eine Maschine 12 überwachen, sondern wenn weitere Sensoren vorgesehen sind, können diese weiteren Sensoren ebenso ausgewertet werden wie der Sensor 16 in der oben beschriebenen Weise. Dies ist ebenfalls in Fig. 1 dargestellt. Die Maschine 12 weist, wie oben bereits kurz angedeutet, den ersten Maschinenteil 12-1 und den zweiten Maschinenteil 12-2 auf, die beide mit Druckluft versorgt werden über Druckluftleitungen 14-1 und 14-2. Die Druckluftleitungen 14-1 und 14-2 zweigen stromabwärts des Sensors 16 von der Haupt-Druckluftleitunge 14 ab. In jeder dieser Druckluftleitungen 14-1 und 14-2 ist ein Sensor 40 bzw. 42 angeordnet. Die Sensoren 40 und 42 haben die gleiche Funktion wie der Sensor 16, also wird mit diesen der Druckluftdurchfluss durch die jeweilige Druckluftleitung 14-1 bzw. 14-2 erfasst. In gleicher Weise wie oben zum Sensor 16 in der Haupt-Druckluftleitung 14 beschrieben, werden die Signale/Daten der Sensoren 40 und 42 ausgewertet bzw. in der Einlernphase eingelernt. Auf diese Weise lassen sich die Maschinenteile 12-1 und 12-2 in gleicher Weise überwachen wie die Gesamtmaschine 12. Ebenso lassen sich mehrere Maschinen in analoger Weise parallel oder gemeinsam überwachen. Diese diversen Überwachungen der verschiedenen Maschinenteile oder Maschinen können von einer gemeinsamen Computereinheit 18 überwacht werden, oder jede Maschine bzw. jedes Maschinenteil hat seine eigene Computereinheit 18.

Das erfindungsgemäße Verfahren zum automatischen Überwachen eines Druckluftverbrauchs und Bestimmen der Betriebsart der Maschine 12 wurde oben bereits teilweise beschrieben und umfasst zusammengefasst die folgenden Schritte, wobei hier Bezug genommen wird auf das Ausführungsbeispiel nach Fig. 1.

In einem ersten Schritt 100 wird ein Luftdurchfluss an der Druckluftleitung 14 der Maschine 12 mit dem Sensor 16 erfasst. In einem zweiten Schritt 102 erzeugt der Sensor 16 ein den erfassten Luftdurchfluss repräsentierendes Signal. Dies ist in der Regel ein elektrisches Signal, das meistens proportional zum Durchfluss ist. In einem dritten Schritt 104 werden die Signale des Sensors 16 fortlaufend, beispielsweise alle paar Sekunden, in die Computereinheit 18 eingelesen und im Speicher 20 gespeichert. Nach Ablauf des Zeitintervalls Ti, beispielsweise 1 Stunde, sind eine große Anzahl solcher Signale erfasst und gespeichert, die dann in einem Schritt 106 zu einzelnen Verbrauchswerten verarbeitet werden. Ein Verbrauchswert entspricht dann jeweils einem zum Aufnahmezeitpunkt erfassten Verbrauch während des Zeitintervalls Ti. In einem Schritt 108 werden aus den Verbrauchswerten des vergangenen Zeitintervalls Ti der Minimalwert Vmin und der Maximalwert Vmax sowie ein Mittelwert Vmean bestimmt. So liegt für jedes Zeitintervall Ti ein Minimalwert, ein Maximalwert und ein Mittelwert des Verbrauchs vor. In einem weiteren Schritt 110 wird die Differenz Δ von Maximalwert Vmax und Minimalwert Vmin bestimmt und in einem Schritt 112 ermittelt, ob diese Differenz Δ oberhalb oder unterhalb des im Einlernverfahren definierten Schwellwerts 30 liegt. Schließlich wird in einem Schritt 114 die erste Betriebsart (idle state) der Maschine 12 angezeigt bzw. ausgegeben, wenn die Differenz unterhalb des Schwellwerts 30 liegt und in einem Schritt 116 die zweite Betriebsart (operation state) angezeigt bzw. ausgegeben, wenn die Differenz oberhalb des Schwellwerts 30 liegt.

In Weiterbildung der Erfindung können auch mehrere Schwellwerte im Einlernverfahren definiert werden, wenn mehrere Betriebsarten möglich sind. Ebenso können für verschiedene Maschinen oder für einzelne Maschinenteile 12-1 und 12-2 jeweils eigene Schwellwerte vorgesehen sein.

Selbstverständlich kann die erfindungsgemäße Vorrichtung auch dazu genutzt werden, Gesamtverbräuche von Druckluft über einen gewissen Zeitraum zu erfassen, speichern und evtl. auszugeben bzw. anzuzeigen. Der Gesamtverbrauch über einen bestimmten Zeitraum ist ebenfalls eine wichtige Größe, die ein Benutzer der Maschine beobachten möchte, wobei die Gesamtverbräuche auch noch aufgesplittet werden können in Verbrauch im Ruhezustand oder Verbrauch im Normalbetrieb. Ebenso lässt sich mit der erfindungsgemäßen Vorrichtung verfolgen, wie lange und zu welchen Zeiträumen die Maschine in welchem Betriebszustand war.

## Patentansprüche

1. Computerimplementiertes Verfahren zum automatischen Überwachen eines Druckluftverbrauchs und Bestimmen der Betriebsart wenigstens einer Maschine (12) mit den Schritten:
- Erfassen wenigstens eines Luftdurchflusses an wenigstens einer Druckluftleitung (14,14-1,14-2) der Maschine (12) mit einem Sensor (16),
- Erzeugen eines den erfassten Luftdurchfluss repräsentierenden Signals durch den Sensor (16),
- Fortlaufendes Einlesen und Speichern der Signale in einer Computereinheit (18),
- nach Ablauf eines bestimmten Zeitintervalls (Ti) entsprechend dem Erfassen einer bestimmten Anzahl solcher Signale, Verarbeiten der gespeicherten Signale zu einzelnen Verbrauchswerten, die jeweils momentanen Verbräuchen während des vergangenen Zeitintervalls (Ti) entsprechen,
- Bestimmen eines Minimalwertes (Vmin) und eines Maximalwertes (Vmax) aus den Verbrauchswerten des vergangenen Zeitintervalls (Ti),
- Bestimmen, ob die Differenz (Δ) von Maximalwert (Vmax) und Minimalwert (Vmin) oberhalb oder unterhalb eines definierten Schwellwerts (30) liegt, wobei der Schwellwert (30) in einem Einlernprozess vorab eingelernt wurde,
- Bestimmen einer ersten und einer zweiten Betriebsart der Maschine (12) über die Differenz (Δ), wobei die erste Betriebsart dann bestimmt ist, wenn die Differenz (Δ) unterhalb des Schwellwerts (30) liegt und die zweite Betriebsart dann bestimmt ist, wenn die Differenz (Δ) oberhalb des Schwellwerts (30) liegt.

2. Verfahren nach Anspruch 1, **dadurch gekennzeichnet, dass** die erste Betriebsart ein Ruhezustand (idle state) der Maschine ist und die zweite Betriebsart ein Normalbetrieb (operating state) ist.

3. Verfahren nach einem der vorhergehenden Ansprüche, **dadurch gekennzeichnet, dass** mehrere Schwellwerte vorgesehen sind und dementsprechend mehr als zwei Betriebsarten bestimmt werden können.

4. Verfahren nach einem der vorhergehenden Ansprüche, **dadurch gekennzeichnet, dass** über die Beobachtung der momentanen Verbrauchswerte und Vergleich dieser mit vergangenen Maximalwerten in der momentanen Betriebsart eine Leckage automatisch erkannt wird und/oder über einen Vergleich der Verbrauchswerte mit Minimal- und Maximalwert eine Fehlfunktion der Maschine in einer jeweiligen Betriebsart festgestellt werden kann.

5. Verfahren nach einem der vorhergehenden Ansprüche, **dadurch gekennzeichnet, dass** Luftdurchflüsse mehrerer Druckluftleitungen mit entsprechender Anzahl von Sensoren erfasst werden.

6. Verfahren nach einem der vorhergehenden Ansprüche, **dadurch gekennzeichnet, dass** Signale von mehreren Sensoren zu einem Verbrauchswert zusammengefasst werden.

7. Verfahren nach einem der vorhergehenden Ansprüche, **dadurch gekennzeichnet, dass** mehrere Maschinen überwacht werden, wobei jeder Maschine maschineneigene Schwellwerte zugeordnet sind.

8. Verfahren nach einem der vorhergehenden Ansprüche, **dadurch gekennzeichnet, dass** die Verbrauchswerte und/oder Betriebsart auf einem Display angezeigt werden.

9. Verfahren nach einem der vorhergehenden Ansprüche, **dadurch gekennzeichnet, dass** das Zeitintervall eine Stunde oder mehr umfasst und das Verarbeiten der Signale zu einem Verbrauchswert für das Zeitintervall ein Aufaddieren der Signalwerte umfasst.

10. Computerimplementiertes Einlernverfahren zum Einlernen des wenigstens einen Schwellwerts (30) für ein Verfahren nach einem der vorhergehenden Ansprüche zum automatischen Überwachen eines Druckluftverbrauchs und Bestimmen der Betriebsart wenigstens einer Maschine (12), wobei das Einlernen des Schwellwerts (30) folgende Schritte umfasst:
- Betreiben der Maschine (12) in den verschiedenen Betriebsarten jeweils über einen längeren Zeitraum, der aus einer Vielzahl der Zeitintervalle (Ti) besteht,
- Erfassen von Verbrauchswerten in dem Zeitintervall (Ti),
- Bestimmen eines Minimalwertes (Vmin) und eines Maximalwertes (Vmax) der Verbrauchswerte aus dem Zeitintervall (Ti),
- Bestimmen einer Differenz (Δ) von Maximalwert (Vmax) und Minimalwert (Vmin),
- Erzeugen eines Histogramms aus den Differenzen (Δ) über den längeren Zeitraum,
- Auswerten des Histogramms und Finden von Spitzenwerten (26,28),
- Zuordnen der Spitzenwerte (26,28) zu den Betriebsarten,
- Setzen von wenigstens einem Schwellwert (30) zwischen die Spitzenwerte (26,28), so dass der Bereich unterhalb des Schwellwerts (30) einer ersten Betriebsart der Maschine (12) zugeordnet ist und der Bereich oberhalb des Schwellwerts (30) einer zweiten Betriebsart.

11. Vorrichtung (10) zum automatischen Überwachen eines Druckluftverbrauchs wenigstens einer Maschine (12) mit:
- wenigstens einem Sensor (16) zum Erfassen wenigstens eines Luftdurchflusses an wenigstens einer Druckluftleitung (14,14-1,14-2) der Maschine (12) und Erzeugen eines den erfassten Luftdurchfluss repräsentierenden Signals durch den Sensor (16),
- einer Computereinheit (18), die ausgebildet ist, das Signal des Sensors (16) fortlaufend einzulesen und in einem Speicher (20) zu speichern sowie nach Ablauf eines bestimmten Zeitintervalls (Ti), entsprechend dem Erfassen einer bestimmten Anzahl der Signale, die gespeicherten Signale zu einzelnen Verbrauchswerten zu verarbeiten, die jeweils momentanen Verbräuchen während des vergangenen Zeitintervalls (Ti) entsprechen,
- und die Computereinheit (18) weiter ausgebildet ist, einen Minimalwert (Vmin) und einen Maximalwert (Vmax) aus den Verbrauchswerten des vergangenen Zeitintervalls (Ti) zu bestimmen,
- und die Computereinheit (18) weiter ausgebildet ist zu bestimmen, ob eine Differenz (Δ) von Maximalwert (Vmax) und Minimalwert (Vmin) oberhalb oder unterhalb eines definierten Schwellwerts (30) liegt, wobei der Schwellwert (30) in einem Einlernprozess vorab eingelernt wurde,
- und die Computereinheit (18) weiter ausgebildet ist, eine erste und eine zweite Betriebsart der Maschine (12) über die Differenz (Δ) zu bestimmen, wobei die erste Betriebsart dann bestimmt ist, wenn die Differenz (Δ) unterhalb des Schwellwerts (30) liegt und die zweite Betriebsart (Δ) dann bestimmt ist, wenn die Differenz (Δ) oberhalb des Schwellwerts (30) liegt.

12. Vorrichtung nach Anspruch 11, **dadurch gekennzeichnet, dass** die Computereinheit Teil des Sensors ist.

13. Vorrichtung nach Anspruch 11 oder 12, **dadurch gekennzeichnet, dass** die Computereinheit einen Ausgang aufweist zum Ausgeben der Betriebsart.

14. Vorrichtung nach einem der vorhergehenden Ansprüche 11 bis 13, **dadurch gekennzeichnet, dass** die Computereinheit ausgebildet ist, Signale mehrerer Sensoren zu verarbeiten zur Überwachung mehrerer Maschinenteile oder mehrerer Maschinen.

15. Vorrichtung nach einem der vorhergehenden Ansprüche 11 bis 14, **dadurch gekennzeichnet, dass** ein Ausgang vorgesehen ist, um bei Erkennung einer Fehlfunktion, wie Leckage, ein Fehlersignal an dem Ausgang auszugeben.

## Claims

1. A computer-implemented method for automatically monitoring a compressed air consumption and for determining the operating mode of at least one machine (12), comprising the steps:
- detecting at least one air flow rate at at least one compressed air line (14, 14-1, 14-2) of the machine (12) using a sensor (16),
- generating a signal which represents the detected air flow rate by means of the sensor (16),
- continuously reading in and storing the signals in a computer unit (18),
- after a certain time interval (Ti) has elapsed, corresponding to the detection of a certain number of such signals, processing the stored signals into individual consumption values which each correspond to instantaneous consumptions during the past time interval (Ti),
- determining a minimum value (Vmin) and a maximum value (Vmax) from the consumption values of the past time interval (Ti),
- determining whether the difference (Δ) between the maximum value (Vmax) and the minimum value (Vmin) is above or below a defined threshold value (30), wherein the threshold value (30) was taught in advance in a teaching process,
- determining a first and a second operating mode of the machine (12) via the difference (Δ), wherein the first operating mode is determined when the difference (Δ) is below the threshold value (30) and the second operating mode is determined when the difference (Δ) is above the threshold value (30).

2. A method according to claim 1, **characterized in that** the first operating mode is a state of rest (idle state) of the machine and the second operating mode is a normal operation (operating state).

3. A method according to one of the preceding claims, **characterized in that** a plurality of threshold values are provided and accordingly more than two operating modes can be determined.

4. A method according to any one of the preceding claims, **characterized in that** a leakage is automatically recognized in the instantaneous operating mode by observing the instantaneous consumption values and comparing them with past maximum values and/or a malfunction of the machine in a respective operating mode can be determined by comparing the consumption values with minimum and maximum values.

5. A method according to any one of the preceding claims, **characterized in that** air flow rates of a plurality of compressed air lines are detected by a corresponding number of sensors.

6. A method according to any one of the preceding claims, **characterized in that** signals of a plurality of sensors are combined to form a consumption value.

7. A method according to any one of the preceding claims, **characterized in that** a plurality of machines are monitored, wherein each machine is assigned the machine's own threshold values.

8. A method according to any one of the preceding claims, **characterized in that** the consumption values and/or the operating mode is/are displayed on a display.

9. A method according to any one of the preceding claims, **characterized in that** the time interval comprises one hour or more and the processing of the signals into a consumption value for the time interval comprises adding up the signal values.

10. A computer-implemented teaching method for teaching the at least one threshold value (30) for a method according to any one of the preceding claims for automatically monitoring a compressed air consumption and for determining the operating mode of at least one machine (12), wherein the teaching of the threshold value (30) comprises the following steps:
- operating the machine (12) in the different operating modes in each case over a longer time period which consists of a plurality of time intervals (Ti),
- recording consumption values in the time interval (Ti),
- determining a minimum value (Vmin) and a maximum value (Vmax) of the consumption values from the time interval (Ti),
- determining a difference (Δ) between the maximum value (Vmax) and the minimum value (Vmin),
- generating a histogram from the differences (Δ) over the longer time period,
- evaluating the histogram and finding peak values (26,28),
- assigning the peak values (26,28) to the operating modes,
- setting at least one threshold value (30) between the peak values (26,28) so that the range below the threshold value (30) is assigned to a first operating mode of the machine (12) and the range above the threshold value (30) is assigned to a second operating mode.

11. An apparatus (10) for automatically monitoring a compressed air consumption of at least one machine (12), said apparatus (10) comprising:
- at least one sensor (16) for detecting at least one air flow rate at at least one compressed air line (14, 14-1, 14-2) of the machine (12) and generating a signal which represents the detected air flow rate by means of the sensor (16),
- a computer unit (18) which is configured to continuously read in the signal of the sensor (16) and to store it in a memory (20) and, after a certain time interval (Ti) has elapsed, corresponding to the detection of a certain number of the signals, to process the stored signals into individual consumption values which each correspond to instantaneous consumptions during the past time interval (Ti),
- and the computer unit (18) is further configured to determine a minimum value (Vmin) and a maximum value (Vmax) from the consumption values of the past time interval (Ti),
- and the computer unit (18) is further configured to determine whether a difference (Δ) between the maximum value (Vmax) and the minimum value (Vmin) is above or below a defined threshold value (30), wherein the threshold value (30) was taught in advance in a teaching process,
- and the computer unit (18) is further configured to determine a first and a second operating mode of the machine (12) via the difference (Δ), wherein the first operating mode is determined when the difference (Δ) is below the threshold value (30) and the second operating mode (Δ) is determined when the difference (Δ) is above the threshold value (30).

12. An apparatus according to claim 11, **characterized in that** the computer unit is part of the sensor.

13. An apparatus according to claim 11 or 12, **characterized in that** the computer unit has an output for outputting the operating mode.

14. An apparatus according to any one of the preceding claims 11 to 13, **characterized in that** the computer unit is configured to process signals of a plurality of sensors for monitoring a plurality of machine parts or a plurality of machines.

15. An apparatus according to any one of the preceding claims 11 to 14, **characterized in that** an output is provided to output an error signal at the output when a malfunction, such as leakage, is recognized.

## Revendications

1. Procédé mis en œuvre par ordinateur pour surveiller automatiquement une consommation d'air comprimé et pour déterminer le mode de fonctionnement d'au moins une machine (12), comprenant les étapes consistant à :
- détecter au moins un débit d'air au niveau d'au moins une conduite d'air comprimé (14, 14-1, 14-2) de la machine (12) à l'aide d'un capteur (16),
- générer un signal, représentant le débit d'air détecté, par le capteur (16),
- lire en continu et enregistrer les signaux dans une unité informatique (18),
- après écoulement d'un intervalle de temps défini (Ti) correspondant à la détection d'un nombre défini de tels signaux, traiter les signaux enregistrés pour obtenir des valeurs de consommation individuelles qui correspondent chacune à des consommations instantanées pendant l'intervalle de temps écoulé (Ti),
- déterminer une valeur minimale (Vmin) et une valeur maximale (Vmax) parmi les valeurs de consommation de l'intervalle de temps écoulé (Ti),
- déterminer si la différence (Δ) entre la valeur maximale (Vmax) et la valeur minimale (Vmin) est supérieure ou inférieure à une valeur seuil définie (30), la valeur seuil (30) ayant été préalablement apprise dans un processus d'apprentissage,
- déterminer un premier et un deuxième mode de fonctionnement de la machine (12) par l'intermédiaire de ladite différence (Δ), le premier mode de fonctionnement étant déterminé lorsque la différence (Δ) est inférieure à la valeur seuil (30) et le deuxième mode de fonctionnement étant déterminé lorsque la différence (Δ) est supérieure à la valeur seuil (30).

2. Procédé selon la revendication 1,
**caractérisé en ce que** le premier mode de fonctionnement est un état de repos (idle state) de la machine et le deuxième mode de fonctionnement est un état de fonctionnement normal (operating state).

3. Procédé selon l'une des revendications précédentes,
**caractérisé en ce qu'**il est prévu plusieurs valeurs seuils permettant, par conséquent, de déterminer plus de deux modes de fonctionnement.

4. Procédé selon l'une des revendications précédentes,
**caractérisé en ce qu'**une fuite est détectée automatiquement par observation des valeurs de consommation instantanées et par comparaison de celles-ci à des valeurs maximales précédentes, dans le mode de fonctionnement instantané, et/ou un dysfonctionnement de la machine peut être détecté par comparaison des valeurs de consommation aux valeurs minimale et maximale, dans un mode de fonctionnement respectif.

5. Procédé selon l'une des revendications précédentes,
**caractérisé en ce que** les débits d'air de plusieurs conduites d'air comprimé sont enregistrés à l'aide d'un nombre correspondant de capteurs.

6. Procédé selon l'une des revendications précédentes,
**caractérisé en ce que** les signaux de plusieurs capteurs sont regroupés en une valeur de consommation.

7. Procédé selon l'une des revendications précédentes,
**caractérisé en ce que** plusieurs machines sont surveillées, chaque machine se voyant attribuer des valeurs seuils qui lui sont propres.

8. Procédé selon l'une des revendications précédentes,
**caractérisé en ce que** les valeurs de consommation et/ou le mode de fonctionnement sont affichés sur un écran d'affichage.

9. Procédé selon l'une des revendications précédentes,
**caractérisé en ce que** l'intervalle de temps est d'une heure ou plus, et le traitement des signaux pour obtenir une valeur de consommation pour l'intervalle de temps comprend l'addition des valeurs des signaux.

10. Procédé d'apprentissage mis en œuvre par ordinateur pour apprendre au moins une valeur seuil (30) pour un procédé selon l'une des revendications précédentes afin de surveiller automatiquement une consommation d'air comprimé et de déterminer le mode de fonctionnement d'au moins une machine (12), l'apprentissage de la valeur seuil (30) comprenant les étapes suivantes consistant à :
- faire fonctionner la machine (12) dans les différents modes de fonctionnement pendant une période prolongée composée d'une pluralité d'intervalles de temps (Ti),
- détecter des valeurs de consommation pendant l'intervalle de temps (Ti),
- déterminer une valeur minimale (Vmin) et une valeur maximale (Vmax) des valeurs de consommation au sein de l'intervalle de temps (Ti),
- déterminer une différence (Δ) entre la valeur maximale (Vmax) et la valeur minimale (Vmin),
- créer un histogramme à partir des différences (Δ) sur la période prolongée,
- évaluer l'histogramme et rechercher des valeurs de crête (26, 28),
- attribuer les valeurs de crête (26, 28) aux modes de fonctionnement,
- fixer au moins une valeur seuil (30) entre les valeurs de crête (26, 28), de sorte que la plage située en dessous de la valeur seuil (30) soit attribuée à un premier mode de fonctionnement de la machine (12) et la plage située au-dessus de la valeur seuil (30) à un deuxième mode de fonctionnement.

11. Dispositif (10) pour surveiller automatiquement une consommation d'air comprimé d'au moins une machine (12), comprenant :
- au moins un capteur (16) pour détecter au moins un débit d'air au niveau d'au moins une conduite d'air comprimé (14, 14-1, 14-2) de la machine (12) et pour générer un signal, représentant le débit d'air détecté, par le capteur (16),
- une unité informatique (18) conçue pour lire en continu le signal du capteur (16) et l'enregistrer dans une mémoire (20) et, après écoulement d'un intervalle de temps défini (Ti), correspondant à la détection d'un nombre défini de signaux, traiter les signaux enregistrés pour obtenir des valeurs de consommation individuelles qui correspondent respectivement aux consommations instantanées pendant l'intervalle de temps écoulé (Ti),
dans lequel
- l'unité informatique (18) est en outre conçue pour déterminer une valeur minimale (Vmin) et une valeur maximale (Vmax) parmi les valeurs de consommation de l'intervalle de temps écoulé (Ti),
- et l'unité informatique (18) est en outre conçue pour déterminer si une différence (Δ) entre la valeur maximale (Vmax) et la valeur minimale (Vmin) est supérieure ou inférieure à une valeur seuil définie (30), la valeur seuil (30) ayant été préalablement apprise dans un processus d'apprentissage,
- et l'unité informatique (18) est en outre conçue pour déterminer un premier et un deuxième mode de fonctionnement de la machine (12) par l'intermédiaire de ladite différence (Δ), le premier mode de fonctionnement étant déterminé si la différence (Δ) est inférieure à la valeur seuil (30) et le deuxième mode de fonctionnement étant déterminé si la différence (Δ) est supérieure à la valeur seuil (30).

12. Dispositif selon la revendication 11,
**caractérisé en ce que** l'unité informatique fait partie du capteur.

13. Dispositif selon la revendication 11 ou 12,
**caractérisé en ce que** l'unité informatique comporte une sortie pour émettre le mode de fonctionnement.

14. Dispositif selon l'une des revendications précédentes 11 à 13,
**caractérisé en ce que** l'unité informatique est conçue pour traiter les signaux de plusieurs capteurs afin de surveiller plusieurs parties de machine ou plusieurs machines.

15. Dispositif selon l'une des revendications précédentes 11 à 14,
**caractérisé en ce qu'**il est prévu une sortie pour émettre un signal d'erreur à la sortie en cas de détection d'un dysfonctionnement, tel qu'une fuite.
